# EUROPEAN PATENT APPLICATION

(11) **EP 4 450 751 A1**
(43) Date of publication of application: **23.10.2024**
(21) Application number: 22926805.7
(22) Date of filing: 14.11.2022
(51) Int. Cl.: E21B 49/08, G06Q 10/06

(54) **QUANTITATIVE DETERMINATION METHOD AND APPARATUS FOR BURIED HILL OIL RESERVOIR MODE, AND MEDIUM AND DEVICE**

(30) Priority: 21.02.2022 CN 202210154906
(71) Applicant: CNOOC Research Institute Co., Ltd., Beijing 100028 (CN); China National Offshore Oil Corporation, Beijing 100010 (CN)
(72) Inventor: MI, Lijun, Beijing 100028 (CN); SONG, Laiming, Beijing 100028 (CN); LIANG, Xu, Beijing 100028 (CN); YANG, Shuo, Beijing 100028 (CN)
(74) Representative: Novagraaf International SA
(86) International application number: PCT/CN2022/131584
(87) International publication number: WO 2023/155501

(57) **Abstract**

Disclosed is a method, apparatus, medium, and device for determining a pattern of a buried hill oil reservoir in a quantitative manner, comprising steps of: identifying lithology of a reservoir body and a non reservoir body inside a buried hill oil layer section; processing a well logging curve, performing vertical zoning on a single well and parallel comparison among multiple wells within buried hill formations, and performing statistics on thickness of non reservoir intervals occurring between zones; analyzing development origins of fracture of the non reservoir intervals based on rock core data; identifying developing law of fracture system in a comprehensive manner using the rock core data and thin slice data; calculating a reservoir pattern evaluation index F based on the evaluation parameters f₁∼f₄; and determining a pattern of the oil reservoir based on the reservoir pattern evaluation index F. The present disclosure innovatively introduces lithology of a reservoir body and a non reservoir body, thickness of a non reservoir interval, development origins of fracture of the non reservoir interval, and fracture system into the determination of a pattern of a buried hill oil reservoir as quantitative indexes, which effectively making up the shortcomings of lack of a quantitative determination method now.

## Description

### FIELD OF THE INVENTION

The present disclosure relates to a method, apparatus, medium, and device for quantitatively determining a pattern of a buried hill oil reservoir, belonging to the technical field of oil and gas reservoir exploration and development.

### BACKGROUND OF THE INVENTION

Patterns of oil reservoirs are important groundwork for the research of oil and gas exploration and development. For a buried hill oil and gas reservoir, it is difficult to objectively determine a pattern of the reservoir, and there is always a debate in the industry over a layered pattern and a massive pattern. As China National Offshore Oil Corporation (CNOOC) continues to advance into the deep offshore layer, the cognition about patterns of several buried hill oil and gas reservoirs of the class of igneous/metamorphic rock that are discovered in China Sea has undergone radical changes (i.e., from layered or quasi-layered patterns to massive patterns). Therefore, clarifying the patterns of the buried hill reservoirs has important theoretical and practical significance for reducing uncertainty in the exploration and development, reasonably evaluating the scale of oil reserve, and formulating efficient development plans for oil fields. At present, the commonly used methods for determining a pattern of an oil reservoir include: 1) a method based on testing and production performance; 2) determination of oil-water layer interface based on well logging interpretation; 3) comprehensive determination based on seismic data, well logging data, mud logging data, core data, thin slice data, and testing data. Among them, the comprehensive determination is one of the most commonly used methods to determine the pattern of the buried hill reservoir. However, this method is severely subjected to subjective factors, and there are many variables that affect a result of the determination, so that it is difficult to determine the pattern of the buried hill reservoir objectively and accurately. At present, there is no method for determining the pattern of the buried hill reservoir in a quantitative manner.

### SUMMARY OF THE INVENTION

In view of the above technical objectives, the present disclosure provides a method, apparatus, medium, and device for determining a pattern of a buried hill oil reservoir in a quantitative manner. The present disclosure innovatively introduces lithology of a reservoir body and a non reservoir body, thickness of a non reservoir interval, development origins of fracture of the non reservoir interval, and fracture system into the determination of a pattern of a buried hill oil reservoir as quantitative indexes, and aims to solve the problems that the existing technical evaluation methods are of the sameness, severely subjected to subjective factors, and unable to perform evaluation in a quantitative manner.

To achieve the above objectives, the present disclosure adopts the following technical solutions.

A method for quantitatively determining a pattern of a buried hill oil reservoir, comprising steps of:
identifying lithology of a reservoir body and a non reservoir body inside a buried hill oil layer section, a lithology evaluation parameter being set as f₁;
processing a well logging curve, performing vertical zoning on a single well and parallel comparison among multiple wells within buried hill formations, and performing statistics on thickness of non reservoir intervals occurring between zones, a thickness evaluation parameter of non reservoir interval being set as f₂;
analyzing development origins of fracture of the non reservoir intervals based on rock core data, a fracture development origin evaluation parameter of non reservoir interval being set as f₃;
identifying developing law of fracture system in a comprehensive manner using the rock core data and thin slice data, a fracture system evaluation parameter being set as f₄;
calculating a reservoir pattern evaluation index F based on the evaluation parameters f₁∼f₄; and
determining a pattern of the oil reservoir based on the reservoir pattern evaluation index F.

In the method for quantitatively determining the pattern of the buried hill oil reservoir, preferably, identifying lithology of a reservoir body and a non reservoir body inside a buried hill oil layer section, comprises a step of:
observing thin rock slices of the buried hill oil layer section by means of a microscope, and determining the lithology of the reservoir body and the non reservoir body inside the buried hill oil layer section based on main structure, formations, and minerals that form a rock, specific processes of which comprise:
machining the thin rock slices by a rock slicing machine and manual processing;
observing the thin rock slices through the microscope to determine main minerals that form the rock, the structure, and the formations; and
naming the reservoir body and the non reservoir body according to an identification standard of thin rock slice related to petroleum and natural gas, and determining whether the reservoir body and the non reservoir body inside the buried hill oil layer section are granite with a value of f₁ of 3, metamorphic rock with a value of f₁ of 2, or clastic rock with a value of f₁ of 1.

In the method for quantitatively determining the pattern of the buried hill oil reservoir, preferably, processing a well logging curve, performing vertical zoning on a single well and parallel comparison among multiple wells within buried hill formations, and performing statistics on thickness of non reservoir intervals occurring between zones, comprises specific processes of:
performing maximum entropy spectral analysis on an oilfield acoustic time difference curve, and obtaining a data difference curve; performing mathematical integral transformation on the data difference curve of each well through Composite Simpson's Rule, and reconstructing a spectral curve of each well; performing filtering on the reconstructed spectral curve to obtain three filtered curves for each well; selecting a point having significant change ranges in all of the three filtered curves as an anomaly; numbering, vertically from top to bottom, anomalies of each well; and connecting key similar anomalies among respective wells in a main strata profile in sequence to complete division and comparison of buried hill strata;
performing statistics on the thickness of non reservoir intervals near the anomalies named the same as each of the wells, and taking arithmetic mean as the thickness evaluation parameter of non reservoir interval f₂.

In the method for quantitatively determining the pattern of the buried hill oil reservoir, preferably, analyzing development origins of fracture of the non reservoir intervals based on rock core data comprises specific processes that:
main common types of fracture in buried hills are structural fracture and weathering fracture, wherein formation of the structural fracture is associated with local geological structure events, and the structural fracture exhibits at rock core as vertical and oblique bedding planes, is accompanied by striation at a fracture surface, and has obvious cutting periodicity, and wherein as a rock layer has been exposed at ground surface for a long time, fracture of the weathering fracture formed by weathering and erosion develops inside weathered crust at a top of the buried hill, appears in a network distribution with high density but poor regularity, and is filled with red oxidized clay therein, and wherein a fracture development origin evaluation parameter of non reservoir interval is f₃.

In the method for quantitatively determining for the pattern of the buried hill oil reservoir, preferably, identifying developing law of fracture system in a comprehensive manner using the rock core data and thin slice data comprises specific processes of:
selecting a typical core sample point, reassembling each fragmented core massive in accordance of a shape of the fracture surface, and counting, based on differences in both dip angle and intersection relationship of the fracture, the number in terms of developing profile of natural fracture at the rock core, and filling them in in a classification table;
selecting a thin slice at a deep portion of a related core sample point, and counting the number in terms of the developing profile of the fracture system and filling them in the classification table; and
performing comprehensive identification based on the counted developing profiles of the fractures of the rock core and the thin slice, wherein the fracture system evaluation parameter is f₄.

In the method for quantitatively determining the pattern of the buried hill oil reservoir, preferably, calculating a reservoir pattern evaluation index F based on the evaluation parameters f₁∼f₄ to determine the pattern of the oil reservoir, comprises specific processes of:
establishing the reservoir pattern quantitative evaluation index F through a weight analysis method, F = 3 × 1 × 3 × 3 = 27, a range of value of F being 1~81.

In the method for quantitatively determining the pattern of the buried hill oil reservoir, preferably, determining a pattern of the oil reservoir based on the reservoir pattern evaluation index F, comprises a specific process that:
according to a criteria of determination of the pattern of an oil reservoir, F<16 determines that the oil reservoir is a layered oil reservoir, and F>16 determines that the oil reservoir is in a pattern of a massive oil reservoir.

A second aspect of the present disclosure provides an apparatus for quantitatively determining a pattern of a buried hill oil reservoir, comprising:
a first processing unit configured to identify lithology of a reservoir body and a non reservoir body inside a buried hill oil layer section, a lithology evaluation parameter being set as f₁;
a second processing unit configured to process a well logging curve, perform vertical zoning on a single well and parallel comparison among multiple wells within buried hill formations, and perform statistics on thickness of non reservoir intervals occurring between zones, a thickness evaluation parameter of non reservoir interval being set as f₂;
a third processing unit configured to analyze development origins of fracture of the non reservoir intervals based on core data, a fracture development origin evaluation parameter of non reservoir interval being set as f₃;
a fourth processing unit configured to identify developing law of fracture system in a comprehensive manner using both the core date and thin slice data, a fracture system evaluation parameter being set as f₄;
a fifth processing unit configured to calculate a reservoir pattern evaluation index F based on the evaluation parameters f₁∼f₄; and
a sixth processing unit configured to determine a pattern of the oil reservoir based on the reservoir pattern evaluation index F.

A third aspect of the present disclosure provides a computer-readable storage medium on which a computer program is stored, wherein the computer program, when being executed by a processor, implements the steps of the above-mentioned method for quantitatively determining a pattern of a buried hill oil reservoir.

A fourth aspect of the present disclosure provides a computer device comprising a memory, a processor, and a computer program stored in the memory and capable of running on the processor, wherein the processor, when executing the computer program, implements the steps of the above-mentioned method for quantitatively determining a pattern of a buried hill oil reservoir.

By using the above technical solutions, the present disclosure has the following advantages:
1. The present disclosure innovatively introduces lithology of a reservoir body and a non reservoir body, thickness of a non reservoir interval, development origins of fracture of the non reservoir interval, and fracture system into the determination of a pattern of a buried hill oil reservoir as quantitative indexes, which effectively making up the shortcomings of lack of a quantitative determination method now.
2. The present disclosure belongs to a quantitative determination method, and is more scientific and reasonable compared to those traditional qualitative estimation methods.
3. The present disclosure adopts simplified quantitative indexes to highlight the key factors of patterns of buried hill oil reservoirs, and can be used as a universal method for determining a pattern of a buried hill oil reservoir.

### BRIEF DESCRIPTION OF THE DRAWINGS

Fig. 1 is a flowchart of a method for quantitatively determining a pattern of a buried hill oil reservoir according to an embodiment of the present disclosure;
Fig. 2 is a schematic diagram of thickness collection of non reservoir intervals according to the embodiment of the present disclosure, where a represents statistics of the thickness of non reservoir intervals near an anomaly point named as the same as Well PL4, and b represents statistics of the thickness of non reservoir intervals near an anomaly point named as the same as Well PL2; and
Fig. 3 is a reservoir pattern determination diagram according to the embodiment of the present disclosure, where a is a layered pattern and b is a massive pattern.

### DETAILED DESCRIPTION OF THE EMBODIMENTS

In order to make the objectives, technical solutions, and advantages of the present disclosure clearer, the technical solutions of the present disclosure are described as following in a clear and complete manner. Apparently, the embodiments that are described are merely a part, rather than all, of embodiments of the present disclosure. Based on the embodiments in the present disclosure, all other embodiments obtained by the ordinary personnel skilled in the art without creative labor should fall within the scope of protection of the present disclosure.

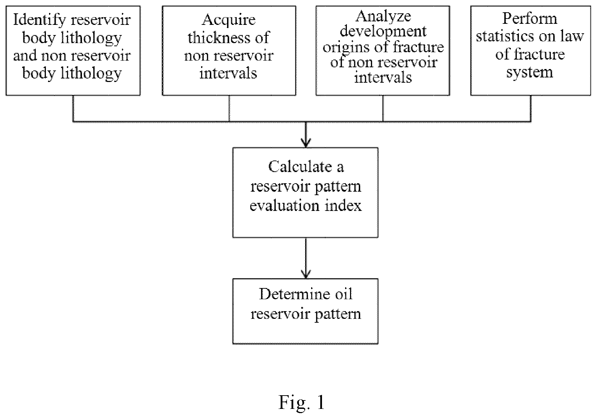

As shown in Fig. 1, a method for quantitatively determining for a pattern of an oil reservoir provided by the present disclosure includes the following steps 1) to 6) (illustrated by taking a PL oil field as an example).
1) Lithology of a reservoir body and a non reservoir body inside a buried hill oil layer section are identified, respectively, wherein a lithology evaluation parameter is set as f₁, in which
thin rock slices of the buried hill oil layer section are observed by using a microscope, and lithology of the reservoir body and the non reservoir body inside the buried hill oil layer section are determined based on the main structure, the formations, and minerals forming the rock. The specific process thereof includes the following steps 1.1) to 1.3):
1.1) machining the thin rock slices by a rock slicing machine and manual processing;
1.2) observing the thin rock slices through the microscope to determine main minerals that form the rock, the structure, and the formations; and
1.3) naming the reservoir body and the non reservoir body according to the identification standard (SY/T5368-2000) of thin rock slice related to petroleum and natural gas, and determining that the buried hill reservoir body and non reservoir body are granite (a type of igneous rock). A value of f₁ of igneous rock is set as 3, a value of f₁ of metamorphic rock is set as 2, and a value of f₁ of clastic rock is set as 1.

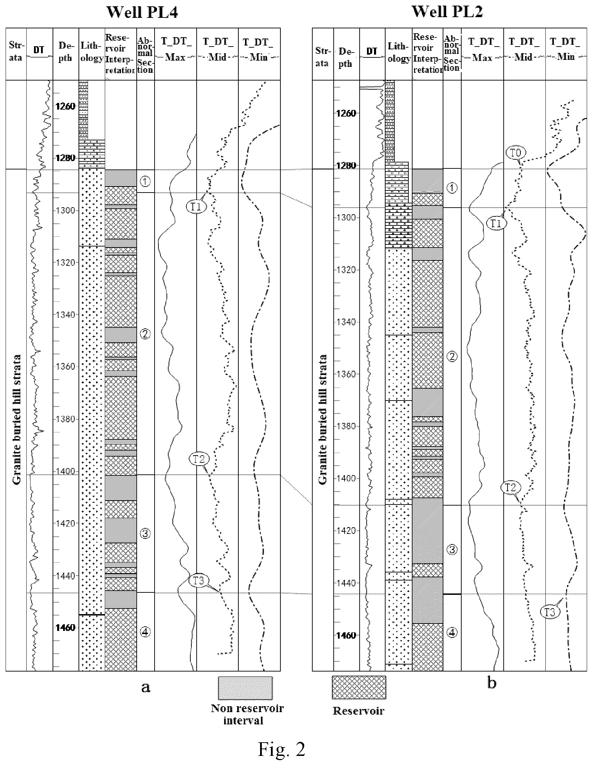

2) A thickness of a non reservoir interval is acquired, wherein a thickness evaluation parameter of non reservoir interval is set as f₂, in which:
the existing technology (patent name: a method for dividing and comparing granite formations, patent number CN106094051B) is applied to process a well logging curve, perform vertical zoning on a single well and parallel comparison among multiple wells within the buried hill formations, and the emphasis is to perform statistics on the thickness of non reservoir intervals occurring between zones. The specific process thereof includes the following steps 2.1) to 2.2):
2.1) applying the existing technology mentioned above to perform maximum entropy spectral analysis on an oilfield acoustic time difference curve (DT) in this embodiment, and obtaining a data difference curve; performing mathematical integral transformation on the data difference curve of each well through the Composite Simpson's Rule, and reconstructing a spectral curve of each well; performing filtering on the reconstructed spectral curve; based on three filtered curves (T-DT maximum, T-DT median, T-DT minimum) obtained from each well after the filtering, selecting a point having significant change ranges in all of the three filtered curves as an anomaly (T0, T1, T2, T3); numbering, vertically from top to bottom, abnormal sections of each well (①, ②, ③, ④); and connecting in sequence the key similar anomalies among respective wells in a main strata profile to complete division and comparison of buried hill strata.
2.2) as shown in Fig. 2, performing statistics on the thickness of non reservoir intervals near the anomalies named the same as each of the wells, wherein the thickness of the non reservoir intervals near anomalies T1 in Well PL2 and Well PL4 is 2.9 meters in average; the thickness of the non reservoir intervals near anomalies T2 in Well PL2 and Well PL4 is 14.1 meters in average; the thickness of the non reservoir intervals near anomalies T3 in Well PL2 and Well PL4 is 9.3 meters in average, and thus the thickness of the non reservoir intervals is 8.7 meters in average according to the comprehensive statistics.

3) Development origins of fracture of the non reservoir intervals are analyzed, wherein a fracture development origin evaluation parameter of non reservoir interval is set as f₃, in which:
the development origins of fracture of the non reservoir intervals are analyzed based on rock core data. The common types of fracture in buried hills are mainly structural fracture and weathering fracture. The formation of structural fracture is associated with local geological structure events, and the structural fracture exhibits at the rock core as vertical and oblique bedding planes, is always accompanied by striation at the fracture surface, and has obvious cutting periodicity. As the rock layer has been exposed at ground surface for a long time, fracture of the weathering fracture formed by weathering and erosion develops inside the weathered crust at the top of the buried hill, appears in a network distribution with high density but poor regularity, and is often filled with red oxidized clay therein. In the present embodiment, the fracture of the non reservoir intervals is the structural fracture.
4) Developing law of fracture system is identified in a comprehensive manner using the core data and thin slice data, wherein a fracture system evaluation parameter is set as f₄, in which:
the developing profile of the fracture system is identified comprehensively by using the core data and the thin slice data. The specific process thereof includes the following steps 4.1) to 4.4):
4.1) selecting a typical core sample point, reassembling each fragmented core massive in accordance of a shape of fracture surface (reassembling back to the original cylindrical shape), and counting, based on differences in both dip angle and intersection relationship of the fracture, the number in terms of developing profile (e.g., network fracture, I-II combined fracture, and none) of the natural fracture at the rock core and filling them in Table 1 below.
4.2) selecting a thin slice at the deep portion of the related core sample point, and counting the number in terms of the developing profile (e.g., network fracture, I-II combined fracture, and none) of the fracture system and filling them in the Table 1 below.
4.3) performing comprehensive identification based on the counted developing profiles of the fractures of the rock core and the thin slice. In the table, for Sample Point 1, a result of the step 4.1) determines that it is the network fracture, which is consistent with a result of the step 4.2), then it is comprehensively determined as the network fracture; for Sample Point 2, a result of the step 4.1) determines that it is the I-II combined fracture, and no fracture is found in the step 4.2), then it is comprehensively determined as the I-II combined fracture; for Sample Point 3, a result of the step 4.1) shows that no fracture is found, and a result of the step 4.2) determines that it is the network fracture, then it is comprehensively determined as the network fracture; for Sample Point 4, it is determined in step 4.1) as the I-II combined fracture, while in the step 4.2) as the network fracture, then it is comprehensively determined as the network fracture; for Sample Point 5, a result of the step 4.1) determines that it is the network fracture, which is consistent with a result of the step 4.2), then it is comprehensively determined as the network fracture.

**Table 1 Identification Table of Fracture System of PL Buried Hill**

| Sample Point | Fracture System Observed at Core | | | Fracture System Observed at Thin Slice | | | Comprehensive Identification Result | | |
|---|---|---|---|---|---|---|---|---|---|
| | Network Fracture | I-II Combined Fracture | None | Network Fracture | I-II Combined Fracture | None | Network Fracture | I-II Combined Fracture | None |
| 1 | 1 | - | - | 1 | - | - | 1 | | |
| 2 | - | 1 | - | - | - | 1 | | | |
| 3 | | | 1 | 1 | | | 1 | | |
| 4 | | 1 | | 1 | | | 1 | | |
| 5 | 1 | | | 1 | | | 1 | | |

4.4) performing, based on the comprehensive identification results of the respective sample points in the step 4.3), statistical summation for each of the three types of fracture systems (network fracture, I-II fracture, and none), and a fracture system having the best summation outcome serves as the finally determined fracture system identification result. Through the comprehensive identification, the fracture system in this embodiment is the network fracture.
5) A reservoir pattern evaluation index is calculated, in which:
based on the evaluation parameters in the steps 1), 2), 3), and 4), a reservoir pattern quantitative evaluation index F is established through a weight analysis method.

In the step 1), the lithology of the reservoir body and the non reservoir body serves as an evaluation parameter f₁, wherein a value of f₁ of igneous rock is 3, a value of f₁ of metamorphic rock is 2, and a value of f₁ of clastic rock is 1. In this embodiment, the value of f₁ is 3.

Specific determination basis thereof is as following: the lithology evaluation parameter f₁ is in a positive correlation with the reservoir pattern determination parameter F. According to extensive research on buried hills at home and overseas, the oil reservoirs formed by igneous, metamorphic, and clastic buried hills are mainly classified as a massive reservoir pattern (having a unified oil-water interface) and a layered reservoir pattern. Among them, a majority of the oil reservoirs of igneous buried hill are the massive reservoir pattern, that is, the value of f₁ thereof should be relatively large; a majority of the oil reservoirs of metamorphic buried hill are the massive reservoir pattern, while a minority thereof are the layered reservoir pattern (mainly depending on the lithology of the original rock before metamorphism), so that the values of f₁ thereof are of middle level; oil reservoirs of clastic buried hill are mostly the layered reservoir pattern, and some of them are the massive reservoir pattern (mainly depending on a thickness of a reservoir and oil fullness of the reservoir), so that the values of f₁ thereof are the smallest.

In the step 2), the thickness of the non reservoir interval serves as an evaluation parameter f₂, wherein a value of f₂ is 1 if a value range of the thickness is greater than 5 meters; a value of f₂ is 2 if the value range of the thickness is between 2 and 5 meters; and a value of f₂ is 3 if the value range of the thickness is less than 2 meters. In this embodiment, the value of f₂ is 1.

Specific determination basis thereof is as follows: the thickness evaluation parameter f₂ of non reservoir interval is in a positive correlation with the reservoir pattern determination parameter F. In fact, the thickness of a non reservoir interval aims to calculate development degree of the internal interval of the buried hill. The larger the thickness of the non reservoir interval is, the more stable lateral distribution of a layer of the interval is, and the higher the probability of the reservoir to be evaluated being a layered reservoir pattern there is. Through statistical analysis on the development of non reservoir intervals within more than ten developed oil fields in China, it is found that in the case that a thickness of a non reservoir interval is greater than 5 meters, a lateral distribution range of the layer of the interval is larger then, and thus the probability of the layered reservoir pattern is higher and a value range of f₂ is the smallest; in the case that the thickness of the non reservoir interval is between 2 and 5, a value range of f₂ is of middle level; in the case that the thickness of the non reservoir interval is less than 2 meters, the lateral distribution range of the non reservoir interval is limited then, which fails to have a sealing effect on the oil reservoir in a vertical direction, and thus the probability of the oil reservoir to be evaluated being a massive reservoir pattern is relatively high and a value of f₂ is the largest.

In the step 3), the development origins of fracture of non reservoir interval serves as an evaluation parameter f₃, wherein a value of f₃ of structural fracture is 3, a value of f₃ of weathered fracture f₃ is 2, and a value of f₃ of no-fracture is 1. In this embodiment, the value of f₃ is 3.

Specific determination basis thereof is as follows: the fracture development origin evaluation parameter f₃ of non reservoir interval is in a positive correlation with the reservoir pattern determination parameter F. The development of fracture plays a decisive role for communicating distributions of oil and water. According to statistics on more than ten buried hill oil fields at home and overseas, it is indicated that in the case that the structural fracture is developed in the non reservoir interval, it means that the oil reservoir has a high probability of communication in a vertical direction and thus is mostly a massive reservoir pattern, and a value of f₃ is large; in the case that weathering fracture is mainly developed in the non reservoir interval, it means that the oil reservoir has a certain degree of communication in the vertical direction, and the value of f₃ is of middle level; in the case that no fracture is developed in the non reservoir interval, the non reservoir interval can have an effect of sealing the oil off the water in the vertical direction, and thus the probability of the oil reservoir to be evaluated being a layered reservoir pattern is relatively high and a value of f₃ is the smallest.

In the step 4), the fracture system serves as an evaluation parameter f₄, a value of f₄ of network fracture is 3, a value of f₄ of I-II combined fracture is 2, and a value of f₄ is 1 in case of no fracture. In this embodiment, the value of f₄ is 3.

Specific determination basis thereof is as follows: the fracture system evaluation parameter f₄ is in a positive correlation with the reservoir pattern determination parameter F. The development of fracture plays a decisive role for communicating distributions of oil and water. According to statistics on more than ten buried hill oil fields at home and overseas, is it indicated that the more fracture systems there are, the greater the probability of communication between the vertical fracture and the lateral fracture is, and thus the probability of the oil reservoir to be evaluated being a massive reservoir pattern is relatively high and a value of f₄ is the largest; in the case that only I-II combined fracture is developed in the oil reservoir to be evaluated, the probability of communication between the vertical and lateral fractures decreases, and the value of f₄ is of middle level; in the case that no fracture is developed in the oil reservoir to be evaluated, the probability of communication between the vertical and lateral fractures is the least, and thus the probability of the oil reservoir to be evaluated being a massive reservoir pattern is the least and the value of f₄ is the smallest.

In the present embodiment, F = 3 × 1 × 3 × 3 = 27.

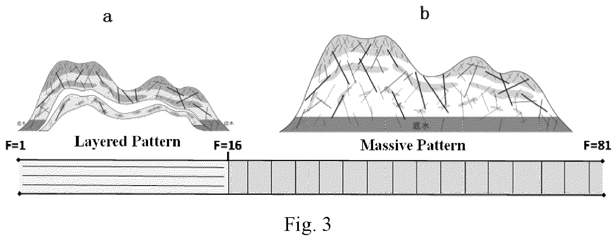

6) A pattern of the oil reservoir can be determined, in which:
according to a criteria for determining the reservoir pattern in Fig. 3, if F<16, it is determined that the oil reservoir is a layered oil reservoir, and if F>16, it is determined that the oil reservoir is in a pattern of massive oil reservoir. In this embodiment, it is in the pattern of massive oil reservoir.

According to a second aspect of the present disclosure, provided is an apparatus for quantitatively determining a pattern of a buried hill oil reservoir, which comprises:
a first processing unit, which is configured to identify lithology of a reservoir body and a non reservoir body inside a buried hill oil layer section, a lithology evaluation parameter being set as f₁;
a second processing unit, which is configured to process a well logging curve, perform vertical zoning on a single well and parallel comparison among multiple wells within the buried hill formations, and perform statistics on the thickness of non reservoir intervals occurring between zones, a thickness evaluation parameter of non reservoir interval being set as f₂;
a third processing unit, which is configured to analyze development origins of fracture of the non reservoir intervals based on core data, a fracture development origin evaluation parameter of non reservoir interval being set as f₃;
a fourth processing unit, which is configured to identify the developing law of fracture system in a comprehensive manner using both the core date and thin slice data, an fracture system evaluation parameter being set as f₄;
a fifth processing unit, which is configured to calculate a reservoir pattern evaluation index F based on the evaluation parameters f₁∼f₄; and
a sixth processing unit, which is configured to determine a pattern of the oil reservoir based on the reservoir pattern evaluation index F.

According to a third aspect of the present disclosure, provided is a computer-readable storage medium on which a computer program is stored, wherein the computer program, when being executed by a processor, implements the steps of the above-mentioned method for quantitatively determining a pattern of a buried hill oil reservoir.

According to a fourth aspect of the present disclosure, provided is a computer device comprising a memory, a processor, and a computer program stored in the memory and capable of running on the processor, wherein the processor, when executing the computer program, implements the steps of the above-mentioned method for quantitatively determining a pattern of a buried hill oil reservoir.

The present disclosure is described based on a flowchart and/or block diagram of a method, device (system), and computer program product of a specific implementation. It should be understood that each step and/or block in the flowchart and/or block diagram as well as the combination of steps and/or blocks in the flowchart and/or block diagram can be implemented by computer program instructions. These computer program instructions can be provided to a processor of a general-purpose computer, a specialized computer, an embedded processing machine, or other programmable data processing device to generate a machine that embodiments an apparatus for achieving functions specified by a step flow or multiple step flows in the flowchart and/or by a block or multiple blocks in the block diagram through instructions executed by the processor of the computer or other programmable data processing device.

These computer program instructions can also be stored in a computer-readable memory that can guide a computer or other programmable data processing device to work in a specific way, so that the instructions stored in the computer-readable memory generates a manufacturing product including an instruction apparatus, which implements the functions specified by a step flow or multiple step flows in the flowchart and/or by a block or multiple blocks in the block diagram.

These computer program instructions can also be loaded onto a computer or other programmable data processing device so that a series of operation steps are carried out by the computer or the other programmable data processing device to generate computer-implemented processing. The instructions executed on the computer or the other programmable device provide steps for implementing the functions specified by a step flow or multiple step flows in the flowchart and/or by a block or multiple blocks in the block diagram.

Finally, it should be noted that the above embodiments are intent to provide illustration only for the technical solutions of the present disclosure, instead of limitation thereto. Although the present disclosure has been described in detail with reference to the above embodiments, it should be understand by those of ordinary skill in the art that modifications still can be made to the technical solutions described in the various foregoing embodiments, or equivalent replacements can still be made to some technical features thereof; and that the essence of the technical solutions related to these modifications or replacements do not deviate from the spirit and scope of the technical solutions of the embodiments of the present disclosure.

## Claims

1. A method for quantitatively determining a pattern of a buried hill oil reservoir, comprising steps of:
identifying lithology of a reservoir body and a non reservoir body inside a buried hill oil layer section, a lithology evaluation parameter being set as f₁;
processing a well logging curve, performing vertical zoning on a single well and parallel comparison among multiple wells within buried hill formations, and performing statistics on thickness of non reservoir intervals occurring between zones, a thickness evaluation parameter of non reservoir interval being set as f₂;
analyzing development origins of fracture of the non reservoir intervals based on rock core data, a fracture development origin evaluation parameter of non reservoir interval being set as f₃;
identifying developing law of fracture system in a comprehensive manner using the rock core data and thin slice data, a fracture system evaluation parameter being set as f₄;
calculating a reservoir pattern evaluation index F based on the evaluation parameters f₁∼f₄; and
determining a pattern of the oil reservoir based on the reservoir pattern evaluation index F.

2. The method for quantitatively determining a pattern of a buried hill oil reservoir according to claim 1, **characterized in that** identifying lithology of a reservoir body and a non reservoir body inside a buried hill oil layer section, comprises a step of:
observing thin rock slices of the buried hill oil layer section by means of a microscope, and determining the lithology of the reservoir body and the non reservoir body inside the buried hill oil layer section based on main structure, formations, and minerals that form a rock, specific processes of which comprise:
machining the thin rock slices by a rock slicing machine and manual processing;
observing the thin rock slices through the microscope to determine main minerals that form the rock, the structure, and the formations; and
naming the reservoir body and the non reservoir body according to an identification standard of thin rock slice related to petroleum and natural gas, and determining whether the reservoir body and the non reservoir body inside the buried hill oil layer section are granite, metamorphic rock, or clastic rock.

3. The method for quantitatively determining a pattern of a buried hill oil reservoir according to claim 1, **characterized in that** processing a well logging curve, performing vertical zoning on a single well and parallel comparison among multiple wells within buried hill formations, and performing statistics on thickness of non reservoir intervals occurring between zones, comprises specific processes of:
performing maximum entropy spectral analysis on an oilfield acoustic time difference curve, and obtaining a data difference curve; performing mathematical integral transformation on the data difference curve of each well through Composite Simpson's Rule, and reconstructing a spectral curve of each well; performing filtering on the reconstructed spectral curve to obtain three filtered curves for each well; selecting a point having significant change ranges in all of the three filtered curves as an anomaly; numbering, vertically from top to bottom, anomalies of each well; and connecting key similar anomalies among respective wells in a main strata profile in sequence to complete division and comparison of buried hill strata;
performing statistics on the thickness of non reservoir intervals near the anomalies named the same as each of the wells, and taking an arithmetic mean as the thickness evaluation parameter of non reservoir interval f₂

4. The method for quantitatively determining a pattern of a buried hill oil reservoir according to claim 1, **characterized in that** analyzing development origins of fracture of the non reservoir intervals based on rock core data comprises specific processes that:
main common types of fracture in buried hills are structural fracture and weathering fracture, wherein formation of the structural fracture is associated with local geological structure events, and the structural fracture exhibits at rock core as vertical and oblique bedding planes, is accompanied by striation at a fracture surface, and has obvious cutting periodicity, and wherein as a rock layer has been exposed at ground surface for a long time, fracture of the weathering fracture formed by weathering and erosion develops inside weathered crust at a top of the buried hill, appears in a network distribution with high density but poor regularity, and is filled with red oxidized clay therein, and wherein a fracture development origin evaluation parameter of non reservoir interval is f₃.

5. The method for quantitatively determining a pattern of a buried hill oil reservoir according to claim 1, **characterized in that** identifying developing law of fracture system in a comprehensive manner using the rock core data and thin slice data, comprises specific processes of:
selecting a typical core sample point, reassembling each fragmented core massive in accordance of a shape of the fracture surface, and counting, based on differences in both dip angle and intersection relationship of the fracture, the number in terms of developing profile of natural fracture at the rock core, and filling them in in a classification table;
selecting a thin slice at a deep portion of a related core sample point, and counting the number in terms of the developing profile of the fracture system and filling them in the classification table; and
performing comprehensive identification based on the counted developing profiles of the fractures of the rock core and the thin slice, wherein the fracture system evaluation parameter is f₄.

6. The method for quantitatively determining a pattern of a buried hill oil reservoir according to claim 1, **characterized in that** calculating a reservoir pattern evaluation index F based on the evaluation parameters f₁~f₄ to determine the pattern of the oil reservoir, comprises specific processes of:
establishing the reservoir pattern quantitative evaluation index F through a weight analysis method, F = 3 × 1 × 3 × 3 = 27, a range of value of F being 1~81.

7. The method for quantitatively determining a pattern of a buried hill oil reservoir according to claim 6, **characterized in that** determining the pattern of the oil reservoir based on the reservoir pattern evaluation index F, comprises a specific process that:
according to a criteria of determination of a pattern of an oil reservoir, F<16 determines that the oil reservoir is a layered oil reservoir, and F>16 determines that the oil reservoir is in a pattern of a massive oil reservoir.

8. An apparatus for quantitatively determining a pattern of a buried hill oil reservoir, comprising:
a first processing unit configured to identify lithology of a reservoir body and a non reservoir body inside a buried hill oil layer section, a lithology evaluation parameter being set as f₁;
a second processing unit configured to process a well logging curve, perform vertical zoning on a single well and parallel comparison among multiple wells within buried hill formations, and perform statistics on thickness of non reservoir intervals occurring between zones, a thickness evaluation parameter of non reservoir interval being set as f₂;
a third processing unit configured to analyze development origins of fracture of the non reservoir intervals based on core data, a fracture development origin evaluation parameter of non reservoir interval being set as f₃;
a fourth processing unit configured to identify developing law of fracture system in a comprehensive manner using both the core date and thin slice data, a fracture system evaluation parameter being set as f₄;
a fifth processing unit configured to calculate a reservoir pattern evaluation index F based on the evaluation parameters f₁∼f₄; and
a sixth processing unit configured to determine a pattern of the oil reservoir based on the reservoir pattern evaluation index F.

9. A computer-readable storage medium on which a computer program is stored, **characterized in that** the computer program, when being executed by a processor, implements the steps of the method for quantitatively determining a pattern of a buried hill oil reservoir according to any one of claims 1-7.

10. A computer device comprising a memory, a processor, and a computer program stored in the memory and capable of running on the processor, **characterized in that** the processor, when executing the computer program, implements the steps of the method for quantitatively determining a pattern of a buried hill oil reservoir according to any one of claims 1-7.
